# EUROPEAN PATENT APPLICATION

(11) **EP 2 564 924 A2**
(43) Date of publication of application: **06.03.2013**
(21) Application number: 12182071.6
(22) Date of filing: 28.08.2012
(51) Int. Cl.: B01J 23/883, B01J 27/051, B01J 37/20, C10G 45/08

(54) **Ultra-dispersed catalyst and method for preparing same**

(30) Priority: 24.08.2012 US 201213593855; 29.08.2011 US 201161528339 P
(71) Applicant: Intevep S.A., Caracas 1070A (VE)
(72) Inventor: Noguera Herrera, Gladys Esperanza, Santa Rosalia, Caracas (VE); Araujo Ferrer, Solange Carolina, San Antonio de Los Altos, Estado Miranda (VE); Rivas Herrera, Angel Benjamin, Los Teques, Estado Miranda (VE); Hernandez Polanco, Javier Ramon, San Antonio de Los Altos, Estado Miranda (VE); Mendoza Chacon, Dietrich Alonso, Los Teques, Estado Miranda (VE); Delgado Gonzalez, Omayra Zuleika, Carrizal, Estado Miranda (VE)
(74) Representative: Behrmann, Niels

(57) **Abstract**

A catalyst composition comprising an emulsion of an aqueous phase in an oil phase, wherein the aqueous phase contains a group 6 metal, and wherein between about 55 and 100 wt% of the group 6 metal is sulfurated. A method for making a catalyst emulsion, comprising the steps of providing an aqueous phase comprising an aqueous solution of a group 6 metal, wherein between about 55 and 100 wt% of the group 6 metal is sulfurated; and mixing the aqueous phase into an oil phase to form an emulsion of the aqueous phase in the oil phase. A hydroconversion process, comprising the steps of contacting the catalyst of claim 1 with a feedstock in a hydroconversion zone under hydroconversion conditions.

## Description

### CROSS REFERENCE TO RELATED APPLICATIONS

This application claims the benefit of U.S. provisional application Serial Number 61/528,339 which was filed on August 29, 2011.

### BACKGROUND OF THE INVENTION

The use of ultra-dispersed catalysts has become an ideal alternative to treating heavy feeds and petroleum residues. With these catalysts, metallic species with high dispersity are obtained, having an elevated activity toward main reactions of interest because of a high ratio area/volume, but they also have a high deactivation rate, reducing their use in processes that work with high quantities of contaminants.

Ultra-dispersed catalysts can be classified as heterogeneous and homogeneous. Homogeneous catalysts are divided into soluble compounds in an aqueous phase or in an organic phase. Heterogeneous catalysts are solids introduced to the process through dry dispersion of the catalytic solid or precursor, finely divided, into the crude. The main disadvantage of heterogeneous solids is that they have a lower activity and they generate byproducts which are difficult in handling.

Soluble precursors are highly reactive, but they have an elevated cost to be used at high scale. Soluble compounds in aqueous phase are injected to process as catalytic emulsions, with the advantage that these precursors are cheaper in comparison with organometallics.

New technologies aim to use ultra-dispersed catalysts, prepared starting from metallic precursors soluble in aqueous phase. PDVSA Intevep has been developing technologies in order to achieve deep conversion and upgrading of heavy and extra-heavy crude oils of the Orinoco Oil Belt. At this point in time, these developments have a catalytic formulation based on W/O emulsions, prepared by an aqueous phase dispersion of molybdenum and nickel in heavy vacuum gasoil, which contained a surfactant. Molybdenum aqueous phase Mo(VI), is an ammonium thiomolybdate solution, prepared *in situ* by sulphurization of a metal dissolution with a sulphiding agent. This sulphurization of Mo(VI) dissolution involves a series of consecutive reactions described in equations 1-2. Thiomolybdate solution is emulsified and injected in a process, where the active catalytic specie is generated *in situ* by thermal decomposition (equation 3).

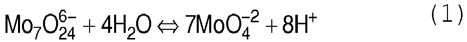

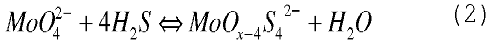

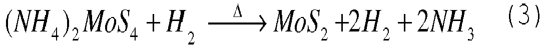

### SUMMARY OF THE INVENTION

In this disclosure the effect of the catalytic precursor sulphurization grade on hydroconversion activity is considered. With vacuum residue 500°C⁺ Merey/Mesa as feedstock, and taking into account changes in the operation conditions regarding concentration of hydrogen sulfide in the reactor and additive particle size, catalytic formulation performance is evaluated.

In accordance with the present invention, it has been found that excellent results can be obtained in a hydroconversion process utilizing an ultradispersed catalyst wherein the group 6 metal is completely sulfurated in aqueous solution, prior to forming the emulsion. By following this process, a catalyst system is obtained which can produce comparable results to earlier processes while using a substantially reduced amount of catalyst metal.

In accordance with the invention, a catalyst composition is provided which comprises an emulsion of an aqueous phase in an oil phase, wherein the aqueous phase contains a group 6 metal, and wherein between about 55 and 100 wt% of the group 6 metal is sulfurated.

In further accordance with the invention, the catalyst can also contain a group 8, 9 or 10 metal, and the group 8, 9 or 10 metal is also preferably sulfurated.

In further accordance with the invention, a method is provided for making a catalyst emulsion, comprising the steps of providing an aqueous phase comprising an aqueous solution of a group 6 metal, wherein between about 55 and 100 wt% of the group 6 metal is sulfurated, mixing the aqueous phase into an oil phase to form an aqueous phase in the oil phase.

The method can further comprise preparing an additional emulsion of an aqueous phase containing a group 8, 9 or 10 metal in an oil phase and the group 8, 9 or 10 metal that can be sulfurated.

Catalyst emulsion in accordance with the invention can advantageously be fed to a hydroconversion zone to contact a hydroconversion feedstock, preferably along with the addition of a organic additive, and the catalyst emulsion which advantageously upgrades the feedstock while the additive controls foam formation and also scavenges catalyst and feedstock metal among other impurities.

Other advantageous features of the present invention will appear from a consideration of the detailed description to follow.

### BRIEF DESCRIPTION OF THE DRAWINGS

A detailed description of preferred embodiments of the present invention follows, with reference to the attached drawings, wherein:

FIG. 1 describes method A and method B for preparation of the present invention;

FIG. 2 describes method C for preparation of the present invention;

FIG 3. shows E-T optical microscopy image at 20x magnification (Example 1);

FIG. 4 shows AT-48 optical microscopy image at 20x magnification (Example 1);

FIG. 5 shows emulsions drop size distribution (a) E-T, (b) AT-48 (Example 1);

FIG. 6 shows estimated concentration of thiomolybdates in solution (a) E-T, (b) AT-48 (Example 1);

FIG. 7 shows reactor inspection after shutdown (a) Reactor, (b) Solid inside the reactor (Example 1);

FIG. 8 shows curve fitting performed in Mo 3d region of solids obtained from decomposition of emulsions, at simulated conditions, with (a) low content (E-T) and (b) high content (AT-48) of sulfiding agent (Example 1);

FIG. 9 shows TEM micrographs of particles obtained from decomposition of emulsions, at simulated conditions, with (a) low (E-T) and (b) high content (AT-48) of sulfiding agent (Example 1);

FIG. 10 shows VR 500°C⁺ conversions (Example 1);

FIG. 11 shows asphaltenes conversions (Example 1);

FIG. 12 shows microcarbon conversions (Example 1);

FIG. 13 shows hydrogenation respect to asphaltenes conversion (Example 1);

FIG. 14 shows light products distribution (Example 1;

FIG. 15 shows heavy products distribution (Example 1);

FIG. 16 shows syncrude yields (Example 1);

FIG. 17 shows micrograph and histogram of post-reaction E-T nano particles distribution size (Example 1);

FIG. 18 shows micrograph and histogram of post-reaction AT-48 nano particles distribution size (Example 1);

FIG. 19 shows post-reaction solids SEM images and zones for compositional analysis using EDS (a) E-T and (b) AT-48 (Example 1);

FIG. 20 shows reactor inspection after shutdown (Example 2);

FIG. 21 shows VR 500°C⁺ conversions (Example 2);

FIG. 22 shows asphaltenes conversions (Example 2);

FIG. 23 shows microcarbon conversions (Example 2);

FIG. 24 shows syncrude yields (Example 2); and

FIG. 25 shows VR 500°C⁺ conversions, syncrude yields (Example 3).

### DETAILED DESCRIPTION

The invention relates to an ultra-dispersed catalyst and method for preparing same wherein excellent results can be obtained while utilizing less catalyst metal as compared to other ultra-dispersed catalyst.

In accordance with the invention, and as will be discussed below, the ultra-dispersed catalyst relates to catalyst emulsions which are decomposed to create ultra-dispersed catalyst suspensions in-situ, wherein the catalyst is preferably a group 6 metal ideally combined with a group 8, 9 or 10 metal. As a method of delivering these metals to the feedstock, the metals are dissolved in an aqueous phase and formed into one or more emulsions in oil, and these emulsions are then mixed or otherwise contacted with the feedstock in a hydroconversion zone where the emulsions are broken, the aqueous phase is boiled off, and the metals are transformed by thermal decomposition in a reducer environment to produce the catalyst in the desired form.

In accordance with the invention, it has been found that advantageous results are obtained when the group 6 metal is sulfurated in aqueous form, prior to forming the catalyst emulsion.

The catalyst is useful for upgrading heavy oils derived from any source such as petroleum, shale oil, tar sand, etc., having high metal, asphaltene and Conradson content. Typical concentrations include metal content (V + Ni) higher than 200 ppm wt, asphaltenes higher than 2 wt%, Conradson carbon higher than 2 wt%, density less than 20°API and more than 40 wt% of the residue fraction boils at a temperature of more than 500°C. The process consists of contacting the feedstock in a reaction zone with hydrogen and hydrogen sulfide, an ultra-dispersed catalyst and an organic additive preferably in an up flow co-current three-phase bubble column reactor.

The catalyst is preferably fed in a concentration between 50 and 1000 ppm wt with respect to the feedstock and comprises one or more emulsions of an aqueous precursor in an oil phase, wherein the aqueous phase comprises an aqueous solution containing a group 6 metal (Group VI B, CAS version) and/or a group 8, 9 or 10 metal (Group VIII B, CAS version). This catalyst has the advantage to form the activate phase *in situ,* by thermal decomposition of precursor compounds that contain the sulfide metal species.

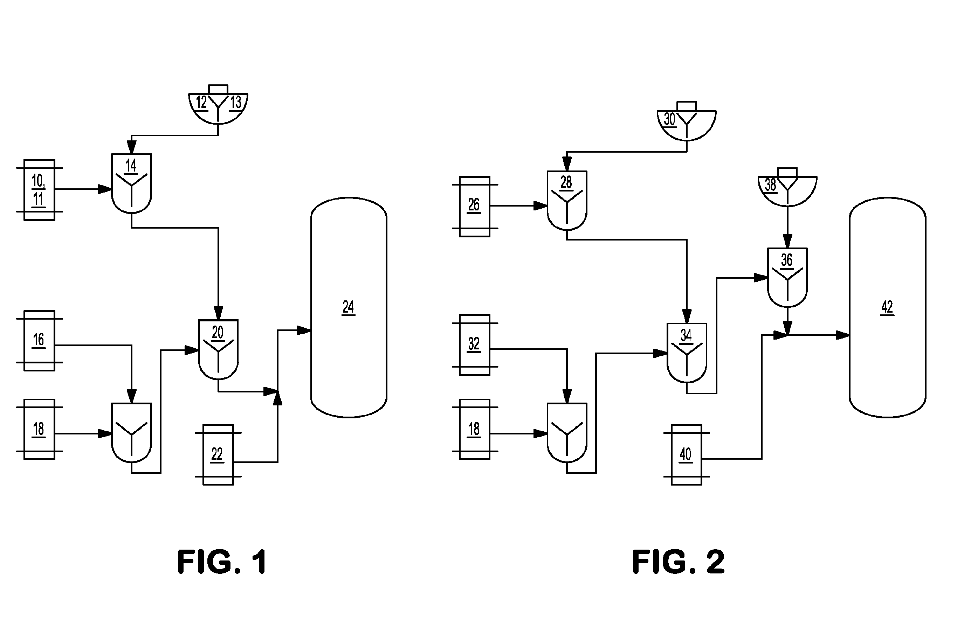

The catalyst preparation process is shown in FIG. 1, wherein a metal salt from group 6 (10), such as ammonium heptamolybdate (AHM), ammonium dimolybdate (ADM) or ammonium tetramolybdate (ATM), is dissolved in an aqueous solution containing a sulfiding agent (12) such as ammonium sulfide, H₂S, sour water from a hydrotreating process with or without stripping, or any other sulfur bearing compound, to form a precursor (14). Such aqueous precursor (14) is prepared with a concentration of metal between 0-20 wt% and a concentration of sulfiding agent between 0-50 wt%. Compounds react for a period of time between 1-50 hours, at a temperature of 10°C to 80°C, under constant agitation, to form a thiomolybdate solution with the maximum concentration of MoS₄²⁻, in a homogenous solution without precipitation. The group 6 metal and sulfiding or sulfurating agent are preferably mixed at amounts sufficient to provide a ratio by weight of group 6 metal to sulfur, S²⁻/M, of at least about 3.0. This ratio holds true for the preferred group 6 metal which is molybdenum, thus, S²⁻/Mo is preferably at least about 3.0.

An oil phase (16) can be mixed with a surfactant (18) in a concentration of around 100 and 10000 ppm wt, for 1-60 minutes, at a constant temperature between 5°C and 50°C. The oil phase can be selected from the group consisting of HVGO, HHGO, mineral oil, petroleum cuts, naphthenic acids extracted from petroleum cuts or mixtures thereof. This oil phase is contacted with the aqueous precursor (14) in a mixer (20), with constant agitation around 100-10000 rpm, at a temperature between 5°C and 50°C, for more than 10 minutes. Subsequently, this emulsion is combined with the feedstock (22) and sent to hydroconversion zone (24) where the catalytic active phase is formed *in situ* by thermal decomposition. Average composition of this emulsion is shown in Table 1. The organic phase, metal salt, surfactant and water concentration, and sulfiding agent can change in other embodiments of the present invention and any such changes are within the scope of the present invention.

**Table 1. Average concentration of group 6 emulsion**

| **Specie** | **Average concentration (wt %)** |
|---|---|
| HVGO | 75-95 |
| Surfactant | 0-10 |
| AHM | 0-20 |
| (NH₄)₂S | 0-50 |
| H₂O | 0-30 |

Catalyst containing a metal from group 8, 9 or 10, preferably nickel, is prepared as described in FIG. 1. The method begins with a water soluble non-noble metal compound (11), such as nitrates, hydrated nitrates, chlorides, hydrated chlorides, sulfates, hydrated sulfates, acetates, formates or mixtures thereof, and continues with constant agitation mixing (14) between the metal compound (11) and distillated water (13) to obtain an aqueous solution with a concentration of nickel salt around 1-50 wt%. At the same time an oil phase (16), which may be identical to or different from the one used for group 6 metals, is prepared to finally mix the oil and the water phase in mixer (20), with constant agitation around 100-10000 rpm, for more than 10 minutes, to form a precursor emulsion that is combined with the feedstock (22) and sent to the hydroconversion zone (24) to form, by thermal decomposition, the *in situ* ultra-dispersed catalyst. Average composition of this precursor emulsion is shown in Table 2. The organic phase, metal salt and surfactant concentration can change in other embodiments of the present invention and any such changes are within the scope of the present invention.

**Table 2. Average concentration of group 8 precursor emulsified**

| **Specie** | **Average concentration (wt %)** |
|---|---|
| HVGO | 80-100 |
| Surfactant | 0-10 |
| AcNi*4H₂O | 0-50 |
| H₂O | 0-30 |

In another embodiment of the present invention which is, shown in FIG. 2, an alternate preparation of a catalyst, from group 8, 9 or 10, preferably nickel is shown. This method begins with a water soluble non-noble metal compound (26), such as nitrates, hydrated nitrates, chlorides, hydrated chlorides, sulfates, hydrated sulfates, acetates, formates or mixtures thereof, and continues with constant agitation mixing (28) between the metal compound (26) and distillated water (30) at a temperature of 10-50°C, to obtain an aqueous precursor with a concentration of nickel salt around 1-50 wt%. At the same time an oil phase (32), identical to or different from the one described for group 6 metals is prepared to finally mix the oil and the water phase in a mixer (34), with constant agitation around 100-10000 rpm, for more than 10 minutes, and then this compound is mixed (36) with a sulfiding agent (38) to finally form an active phase dispersed in the oil phase, that is combined with the feedstock (40) and sent to the hydroconversion zone (42) where water is eliminated to ultra-disperse the catalytic phase in the reaction zone.

The use of these catalysts can be in conjunction with the use of an organic additive, such as the one disclosed in co-pending and commonly owned U.S. Patent Application N° 2011/0174690 A1, filed in Jan. 21, 2010, which is incorporated herein by reference.

The process outlined above results in one or more catalyst emulsions which have advantageous properties over prior catalyst emulsions. The key difference of these emulsions as compared to earlier disclosures is that the group 6 metal in the aqueous phase of the catalyst emulsion is between about 55 and 100 wt% sulfurated, meaning that the metal in the aqueous phase is ideally completely sulfurated, which is defined herein as meaning that as much group 6 metal as possible sulfide form (for example, MoS₄²⁻) without precipitation. As will be demonstrated in the examples to follow, by preparing the emulsion containing group 6 metal in this form, excellent results can be obtained while using substantially reduced amounts of group 6 metal as compared to catalyst emulsions wherein the group 6 metal is sulfurated after emulsion formation.

While any group 6 metal can be used, the preferred group 6 metal in accordance with the present invention is molybdenum, and the resulting aqueous phase can therefore be referred to as a thiomolybdate solution. Further, the examples which follow are given in terms of molybdenum, nevertheless, other group 6 metals behave in similar fashion to molybdenum, and a person skilled in the art can readily adapt to the teachings disclosed herein to the use of other group 6 metals within the scope of the present invention.

It is also noted that the group 8, 9 or 10 metals mentioned above are typically used as promoters of the group 6 metal in the catalyst. Thus, these other metals (groups 8, 9 or 10) are optionally and preferably included in the catalyst compositions and emulsions in accordance with the present invention. Emulsions containing the groups 8, 9 or 10 metals can be prepared and mixed with the group 6 metal emulsion, or prepared and fed to the reaction zone separately, all within the broad scope of the present invention. With respect to the promoter emulsions, it has been found that excellent results are also obtained when the promoter metals are also sulfurated, but in this instance, the sulfuration can occur after formation of the group 8, 9 or 10 metal emulsion. Examples showing the effect of this sulfuration are also set forth below.

Details of the overall hydroconversion process into which the catalyst composition can preferably be introduced are as disclosed in commonly owed U.S. patent application No. 12/691,205, filed January 21, 2010 which is incorporated herein by reference.

Any hydroconversion feedstock can be used, and one suitable example is Vacuum residue 500-°C+ Merey/Mesa, used as feedstock for the experimental. This residue is a mixture of 53 v/v% Merey crude and 47 v/v% Mesa crude. The vacuum residue Merey/Mesa was characterized in accordance with standard procedures and properties are listed in Table 3.

**Table 3. Properties of feedstock VR Merey/Mesa**

| Parameter | Merey/Mesa |
|---|---|
| Gravity API at 60 °C | 5 |
| Carbon (wt %) | 84.3 |
| Hydrogen (wt %) | 11.05 |
| Total sulfur (wt %) | 3.28 |
| Nitrogen (wt %) | 0.76 |
| V (ppm) | 432 |
| Ni (ppm) | 104 |
| Asphaltenes (n-C₇ Insolubles) (wt %) | 18.71 |
| Asphaltenes (IP-143) (wt %) | 19.3 |
| Toluene Insolubles (wt %) | 0.122 |
| Microcarbon (wt %) | 21.7 |
| TAN (mgKOH/g) | 0.65 |
| Kinematic viscosity at 100 °C (cSt) | 18936 |
| Kinematic viscosity at 135 °C (cSt) | 1299 |
| Ashes (wt %) | 0.019 |
| Saturates (wt %) | 13 |
| Aromatics (wt %) | 41 |
| Resins (wt %) | 31 |
| Asphaltenes (wt %) | 15 |
| Residue 500 °C+ (wt %) | 96.3 |

As indicated above, an organic additive is advantageously used to minimize foam, control temperature, adsorb contaminants (asphaltenes and metals) and possibly to serve as a support for the active catalytic species for some of the chemical reactions that take place in the reaction zone. Average particle sizes (X₅₀) of the additive influence results as shown in the following examples.

In accordance with the invention, adding sulfur to completely sulfurate the group 6 metal before forming the emulsion leaves to an emulsion with different properties than the emulsion which is made and then sulfurated. Specifically, and as demonstrated below, the droplet size distribution of an emulsion made in accordance with the present invention differs from an emulsion wherein the group 6 metal is not fully sulfurated prior to formation of the emulsion. In accordance with the present invention, and in distinction to the conventionally formed emulsions, the emulsion in accordance with the present invention preferably has an average droplet size of 10 µm.

In addition, the catalyst particles formed from decomposition of the emulsion in accordance with the present invention also have a different particle size distribution than the particles formed from decomposition of a known emulsion. Specifically, the catalyst of the present invention, when subjected to hydroconversion conditions, generates post-reaction solids having a particle size distribution between 0.1 and 15 nm.
The following examples illustrate features of the present invention which are significant individually and also in combination with each other.

### Examples

### Example 1

### Feedstock

In order to test catalyst hydrogenation, a vacuum residue 500°C⁺ Merey/Mesa, was used as feedstock. This residue is a mixture of 53 v/v% Merey crude and 47 v/v% Mesa crude. The vacuum residue Merey/Mesa was characterized in accordance with standard procedures and properties are listed in Table 3 above.

Catalyst precursors were synthesized according to the methods of FIG. 1 discussed above, obtaining ultra-dispersed W/O emulsion of molybdenum and nickel, which active species were generated *in situ* through thermal decomposition of the emulsified system in a reducer environment of H₂/H₂S.

Catalyst preparation had several stages. The first stage consisted in preparing a solution of Mo(VI), by direct dissolution of AHM with a sulfiding agent, at a determinate composition and temperature with constant stirring.

In the second stage, a quantity of the continuous phase was mixed (HVGO) (main properties in Table 4) with the surfactant; this mixture was homogenized with mechanical stirring. The emulsion was prepared by incorporation of aqueous Mo precursor in the organic matrix, formed by heavy vacuum gasoil (containing surfactant), using mechanical stirring.

**Table 4. Properties of HVGO Merey/Mesa**

| Parameter | Merey/Mesa |
|---|---|
| Gravity API at 60 °C | 17.9 |
| Carbon (wt %) | 85.29 |
| Hydrogen (wt %) | 12.74 |
| Total sulfur (wt %) | 2.02 |
| Nitrogen (wt %) | 1826 |
| V (ppm) | 0.001 |
| Ni (ppm) | < 1 |
| Asphaltenes (n-C₇ Insolubles) (wt %) | 0.1 |
| Asphaltenes (IP-143) (wt %) | < 0.5 |
| Toluene Insolubles (wt %) | 0.02 |
| Microcarbon (wt %) | 0.26 |
| TAN (mgKOH/g) | 1.33 |
| Kinematic viscosity at 100 °C (cSt) | 11.94 |
| Kinematic viscosity at 135 °C (cSt) | 4.317 |
| Ashes (wt %) | 0.0037 |
| Saturates (wt %) | 50 |
| Aromatics (wt %) | 46 |
| Resins (wt %) | 4 |
| Asphaltenes (wt %) | < 1 |

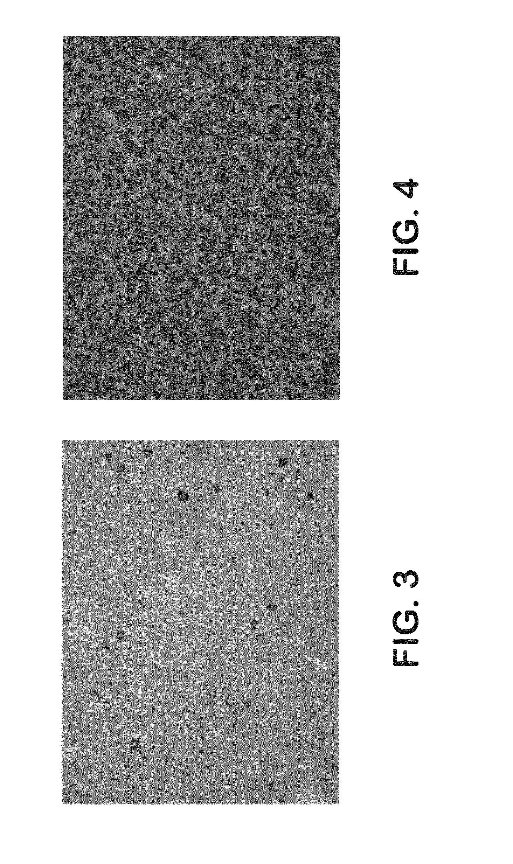

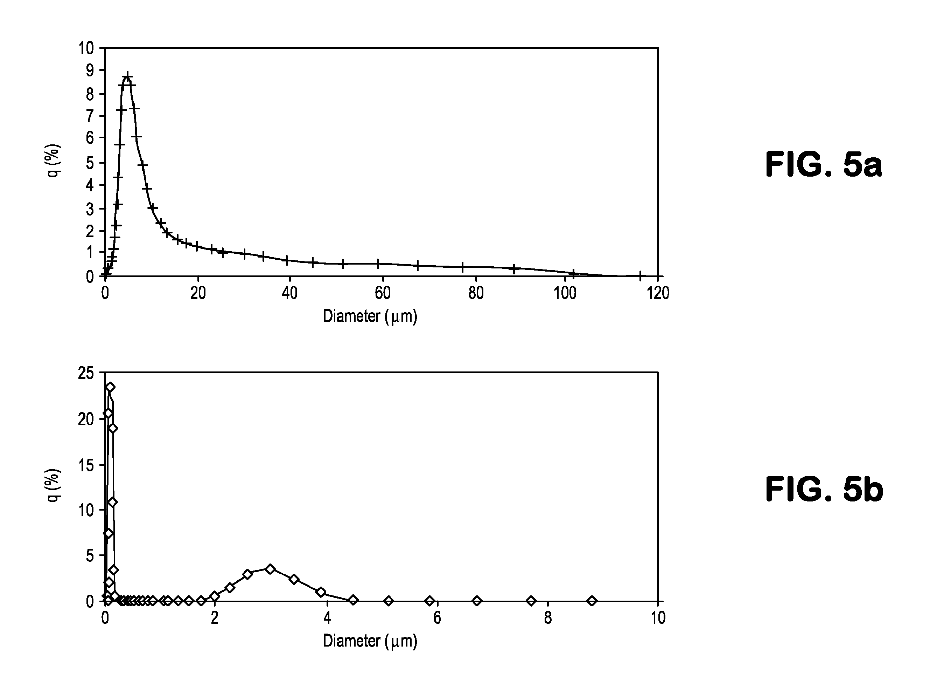

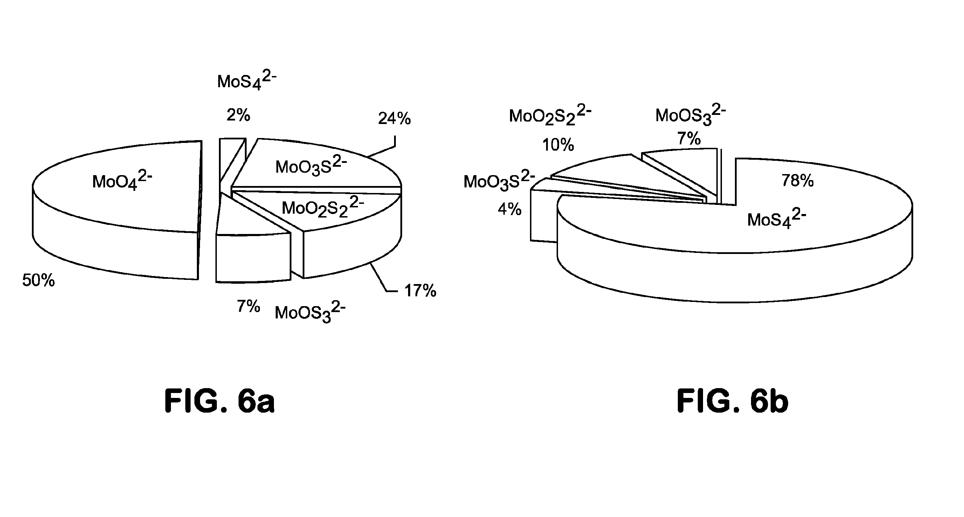

Two catalyst emulsions were formulated. The first one was prepared starting with a Mo precursor, partially presulfurated in solution. This formulation is completely sulfurated after being emulsified. A second catalyst emulsion was prepared starting with a Mo precursor, completely sulfurated, in where MoS₄² was maximized, without solids precipitation. The first emulsion was called E-T, while the fully-sulfurated-in-solution emulsion was called AT-48. Optical microscopy and drop size distribution of catalytic molybdenum emulsions, E-T and AT-48, are shown in FIGS. 3-5. Concentrations of the different sulfurated species, for each formulation are shown in FIG. 6.

Nickel emulsion was prepared similarly to the E-T molybdenum emulsion. First, a nickel aqueous precursor was prepared using Nickel (II) acetate tetrahydrated, with a specific concentration. Then this solution was incorporated in the organic matrix, which had been previously contacted with the surfactant.

### Additives

An organic additive was used, in the hydroconversion process as disclosed in co-pending and commonly owned U.S. Patent Application No. 2011/0174690A1, filed in January 21, 2010, in order to minimize foam, control temperature, adsorb contaminants (asphaltenes and metals) and possibly to serve as a support for the active catalytic species for some of the chemical reactions that take place in the reaction zone. The additive was first sieved to adjust the average size of the particles; two average sizes (X₅₀) were used: 19.9 µm and 94.8 µm.

### Experimental setup

The catalysts performances, at 445 °C, were tested using a pilot plant with one reactor with a total volume of 1200 ml. This reactor has five heating zones, in which five isothermal furnaces are placed. Also, this plant has an additive injection system, feedstock and gas preheating systems, emulsion tanks, recycle and feed, a high pressure high temperature separator, a three-phase separator, heavy and light product tanks, and a sampling system. This experimental setup corresponds to scaled-down system of the process disclosed in our co-pending and commonly owned U.S. Patent Application N° 2011/0120908 A1, filed January 21, 2010.

Four different conditions were tested, as shown in Table 5.

**Table 5. Operation conditions**

| # Catalyst | [Mo] (ppm wt) | T (°C) | P (psig) | LHSV (h⁻¹) | Particle size (µm) |
|---|---|---|---|---|---|
| 1 E-T/Ni | 500 | 445 | 2159 | 0.4 | 19.9 |
| 2 AT-48/Ni | 325 | 445 | 2159 | 0.4 | 19.9 |
| 3 AT-48/Ni | 300 | 445 | 2160 | 0.4 | 19.9 |
| 4 AT-48/Ni | 300 | 445 | 2159 | 0.4 | 94.8 |

It should be noted that for conditions 1 and 2 recycle gas was used, and for conditions 3 and 4 only fresh hydrogen was used. For all conditions, nickel concentration was the same.

### Results

The pilot plant had a total of 1036 hours in stream, with 36 mass balances closed in the acceptable range (10 for condition 1, 13 for condition 2, 5 for condition 3 and 8 for condition 4) with an average ratio percentage of massout/massin, around 99 ± 1 %.

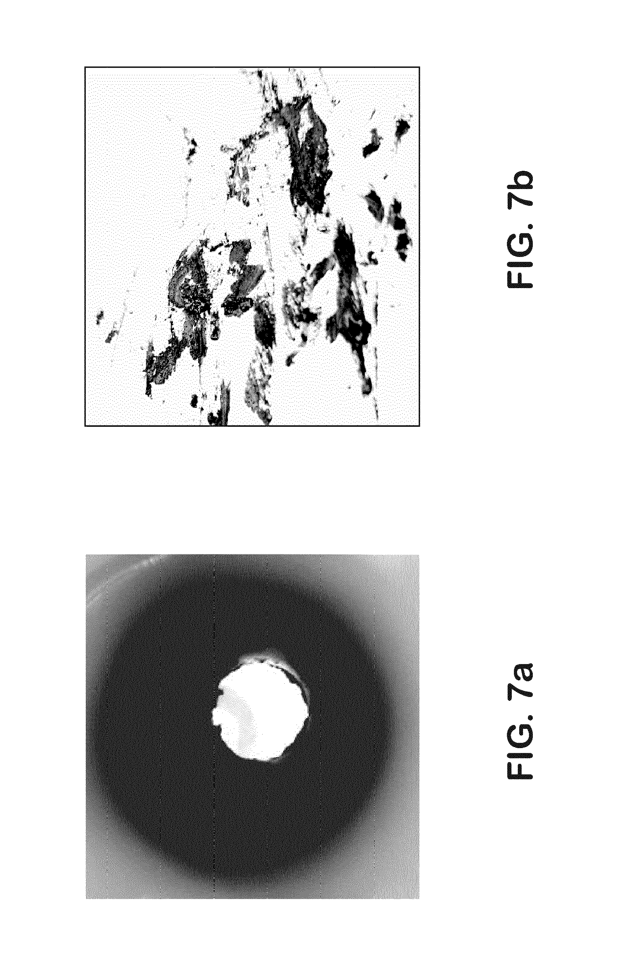

Regarding reactor inspection, at the end of the test, almost no fouling inside the reactor was formed, as shown in FIG. 7(a), and also it could be seen that the solid inside of the reactor was easily removed (FIG. 7 (b)). The solid represented part of the organic additive mixed with the feedstock. This behavior is typical of good hydrogenation catalysts, which means that VR 500°C⁺ and asphaltenes are converted with low coke production, which is a very desirable property for a hydrocracking/hydrotreating catalyst.

### Emulsion decomposition

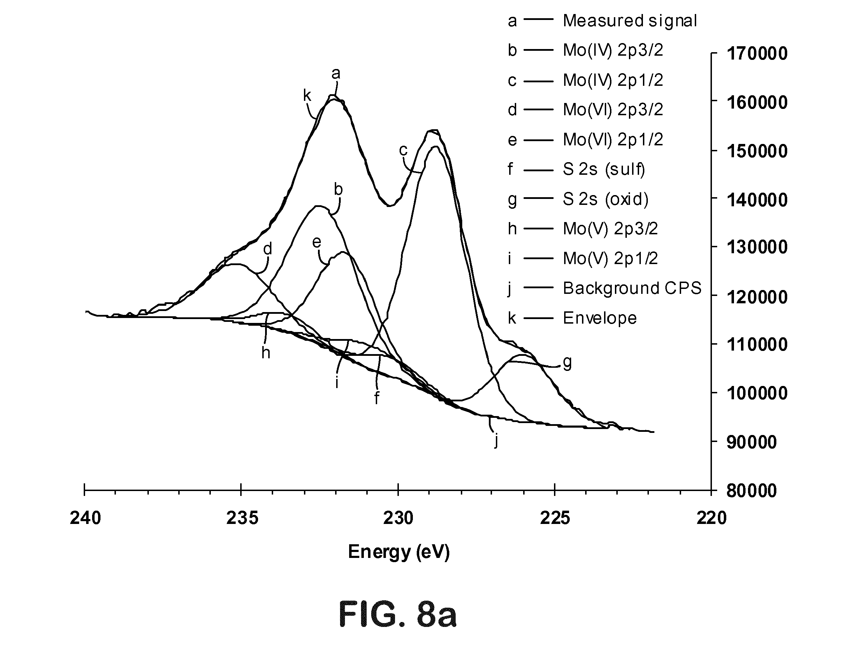

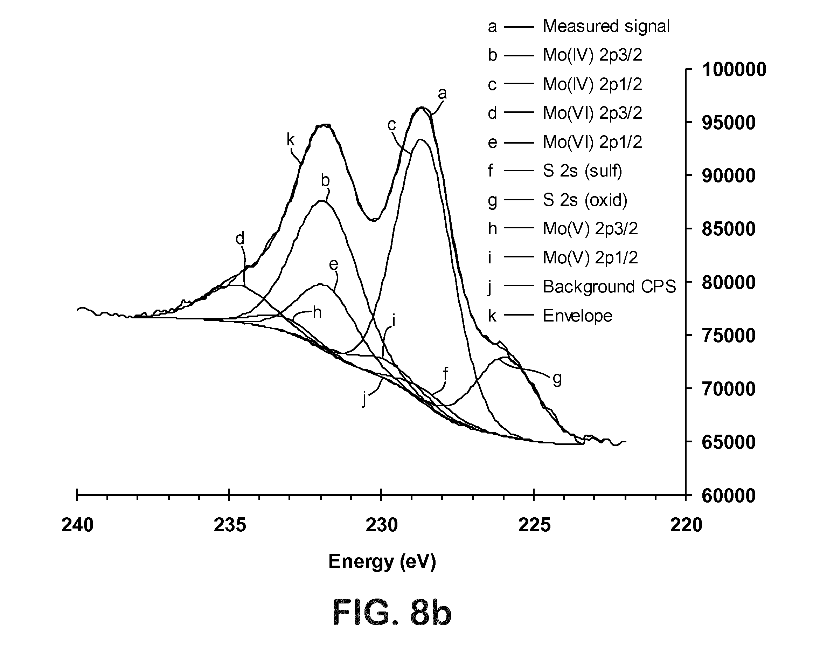

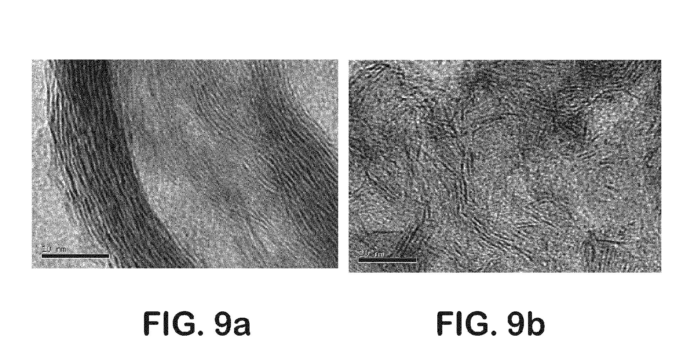

Solids generated during the emulsion decomposition, at simulated conditions, of E-T and AT-48 were characterized by XPS (FIGS. 8a and 8b) and TEM (FIGS. 9a and 9b). By XPS it was observed that for Mo specie, two main peaks were detected at binding energies (B.E.) 228 eV and 231 eV, respectively. It is assumed that the peak at 228.6 eV represents the presence of Mo⁴⁺, while that at 231 eV is the result of the overlap of the 3d3/2 peak of Mo⁴⁺ and 3d5/2 peak of Mo⁶⁺. Also, sulfur was detected as single specie in the form of sulfide ion at ≈ 162 eV. These results evidenced the formation of MoS₂ particles. Ratio of S/Mo by XPS is shown in Table 6.

TEM results show phase MoS₂ in both formulations, with differences in the layer structure due to the sulfiding agent concentration. For the formulation AT-48, the result is particles with less stacking, shorter slabs, better dispersion, and more structural defects in MoS₂ phases, than particles produced by emulsion E-T.
Table 6. Ratio of S/Mo from XPS of solids obtained from decomposition of emulsions with low content (E-T) and high content (AT-48) of sulfurizing agent

| Formulation | Mo⁴⁺ 3d5/ (eV) | Mo⁶⁺ 3d5/2 (eV) | %Mo⁴⁺ | %Mo⁶⁺ | S/Mo⁴⁺ |
|---|---|---|---|---|---|
| E-T | 228.8 | 231.6 | 65.4 | 27.5 | 2.26 |
| AT-48 | 228.6 | 231.8 | 74.9 | 19 | 2.4 |

### Conversions

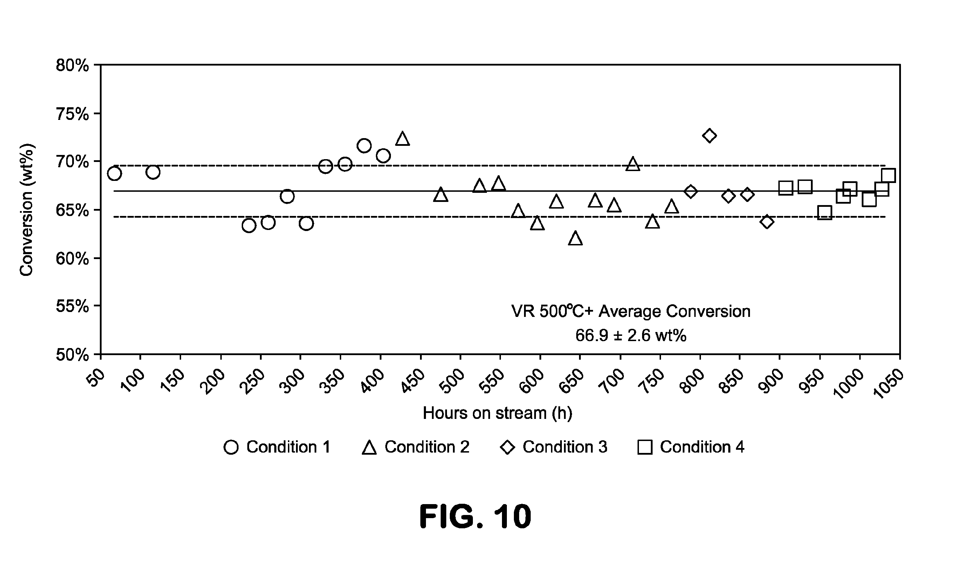

VR 500°C⁺ conversions are presented in FIG. 10, showing no particular effect over conversion levels when the formulations were changed, conversion remained constant during the whole test, and was equal to 66.9 ± 2.6 wt %. It should be noted that this conversion had a low value because at the operating conditions, process was working at low severity. AT-48 had a similar behavior to E-T, although using 40 wt % less molybdenum concentration in average, which represents an advantage because of the cost of molybdenum.

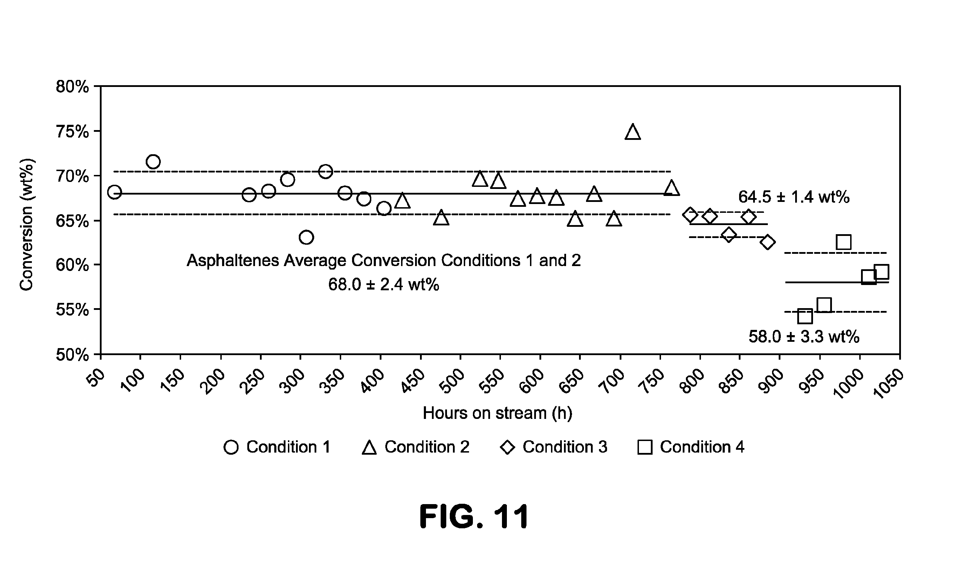

Asphaltene conversions are presented in FIG. 11, and it can be seen that for the first two conditions tested average asphaltenes conversions were equal, with a value of 68.0 ± 2.4 wt %. For conditions 3 and 4 a variation was seen, having values of 64.5 ± 1.4 wt % and 58.0 ± 3.3 wt %, respectively. This behavior had a correlation with gas and particle size fed to the process. It can be seen that the use of recycle gas (conditions 1 and 2), kept the asphaltene conversion at a high level due to the higher hydrogen sulfide concentration. To work with additive particles with a higher average size (condition 4) decreases the asphaltenes conversion due to the influence over the asphaltenes capture, which seems to decrease when average particle size increases.

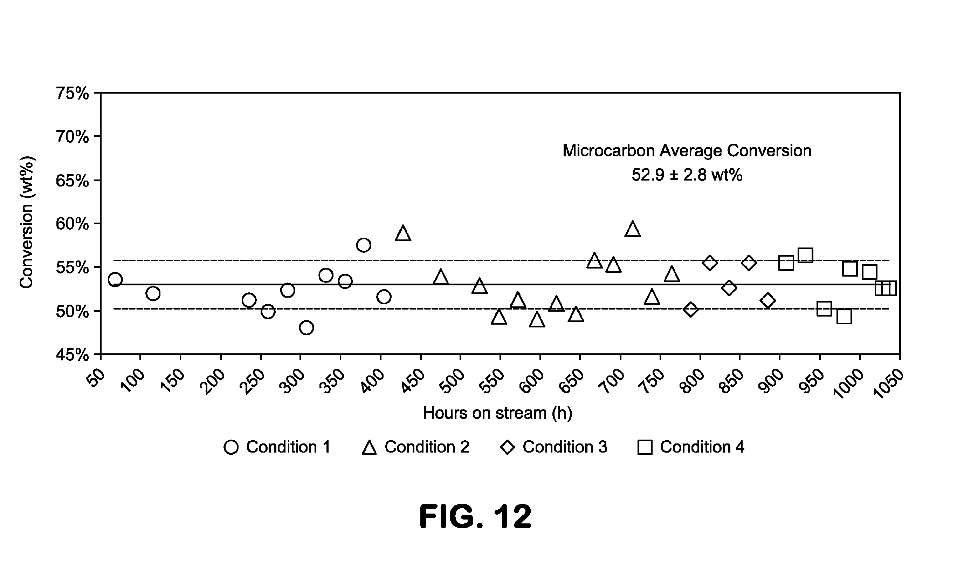

Microcarbon conversions are shown in FIG. 12, as VR 500°C⁺ conversions these conversions were kept in the same average for the conditions tested, which means that the change in formulations and in particle sizes does not improve microcarbon conversion but also does not adversely affect this value.

### Hydrogenation

Hydrogenation ratio (Xₐₛₚₕₐₗₜₑₙₑₛ/X_{500°C+}) is presented in Table 7. It can be observed that, for all conditions, a good hydrogenation was obtained. In addition, for condition 4, a lower ratio was obtained, which is in concordance with a lower asphaltenes conversion.

**Table 7. Ratio Xₐₛₚₕₐₗₜₑₙₑₛ/X_{500°C+}**

| Condition | Xₐₛₚₕₐₗₜₑₙₑₛ/X_{500°C+} |
|---|---|
| 1 | 1.0 |
| 2 | 1.0 |
| 3 | 1.0 |
| 4 | 0.9 |

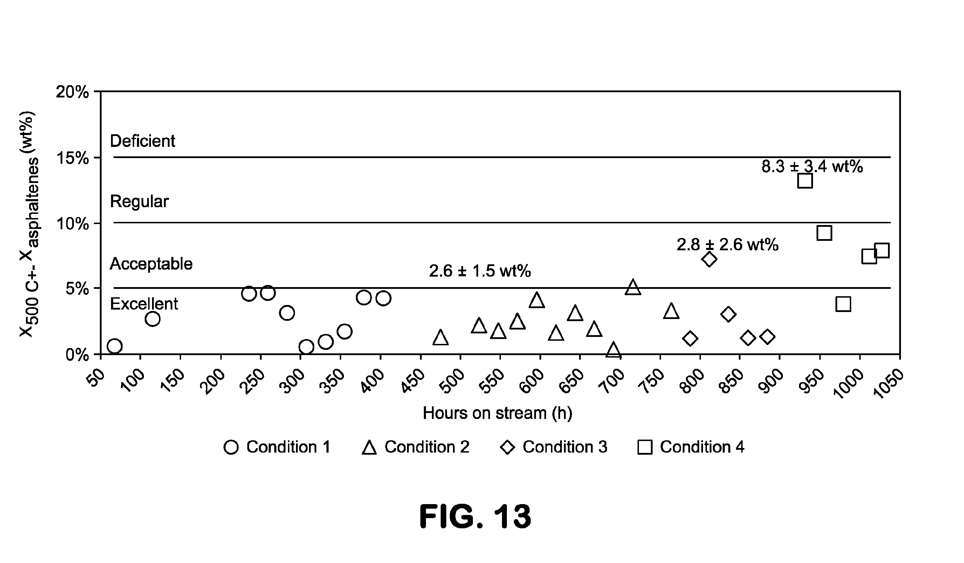

A different criteria was applied as seen in FIG. 13, taking into account differences between X_{500°C+} and Xₐₛₚₕₐₗₜₑₙₑₛ. Results are in concordance with the ones shown in Table 7, for conditions 1-3, hydrogenation was excellent and for condition 4, hydrogenation was only acceptable.

### Liquid product yields

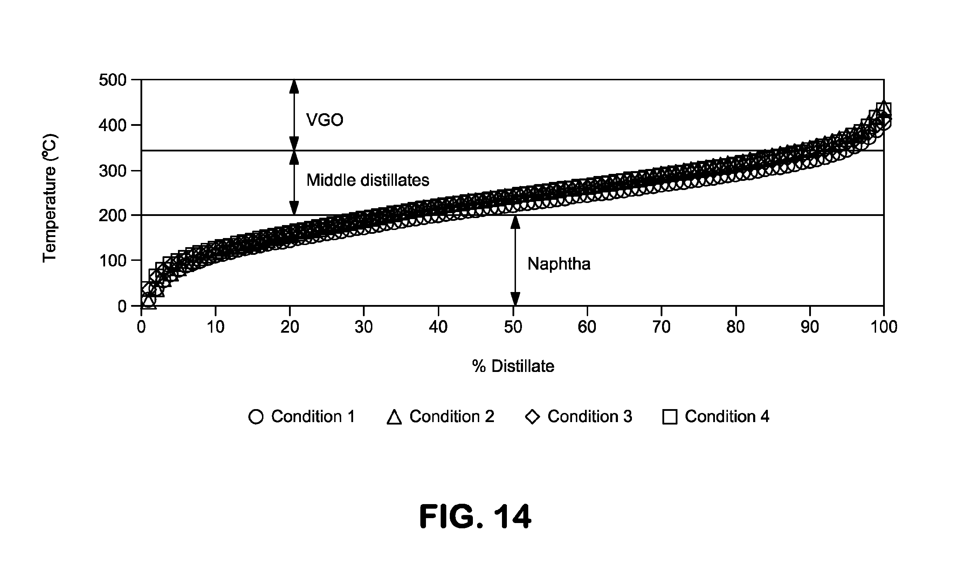

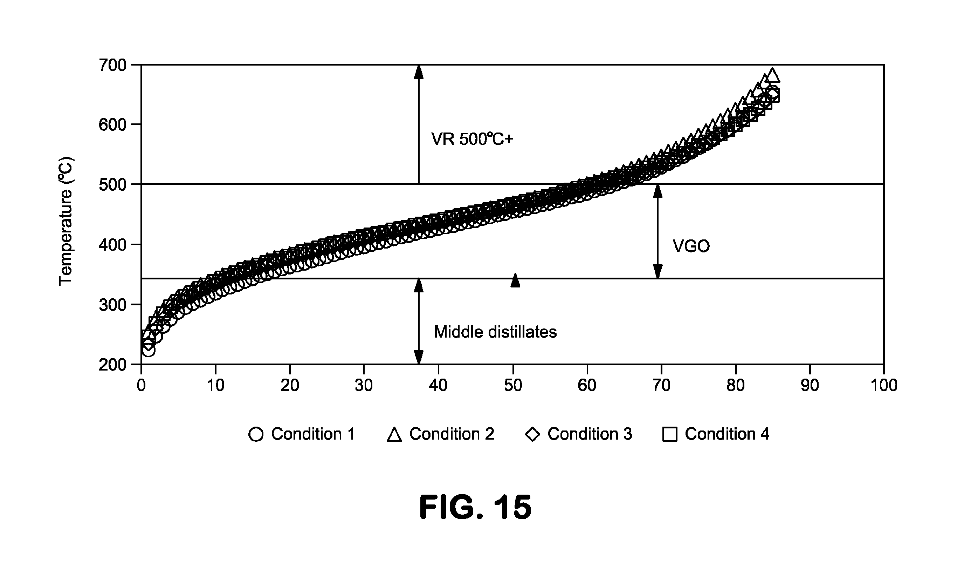

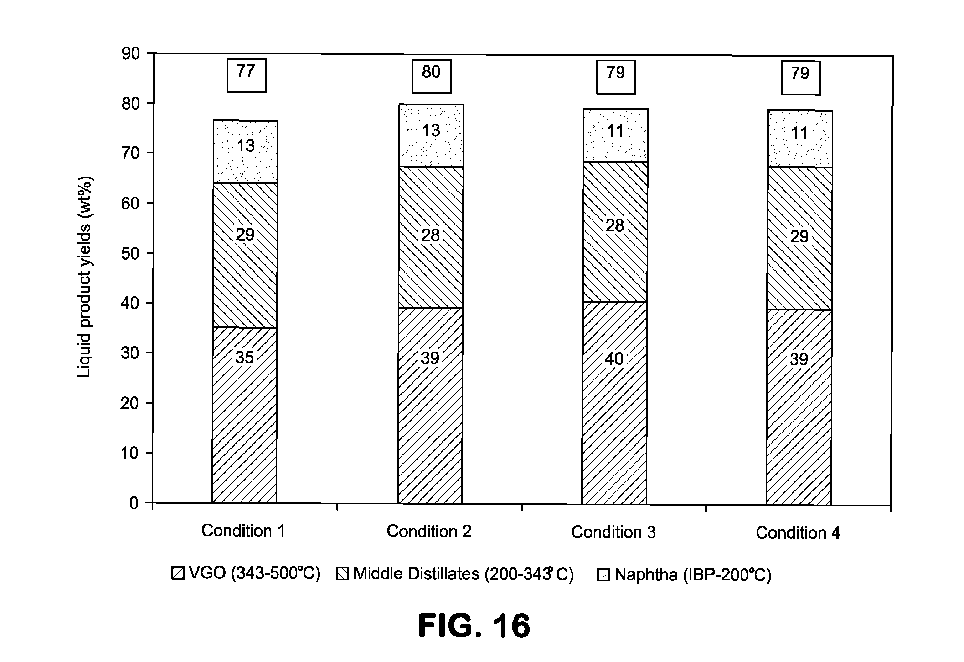

As seen in FIGS 14 and 15, there is almost no difference between heavy and light products distribution for the two formulations tested (E-T and AT-48), which means that using around 40 wt% less metal concentration in formulation (AT-48), a similar product with good quality can be obtained as can be seen in FIG. 16. Also, with AT-48 an increase of around 2-3 wt% of the liquid product yield was found.

### Post-catalyst particles

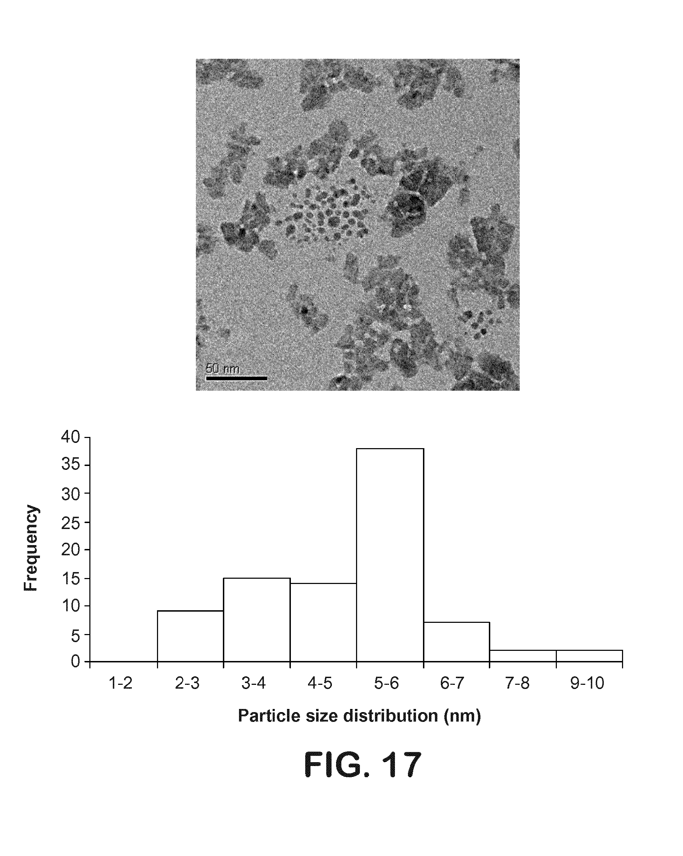

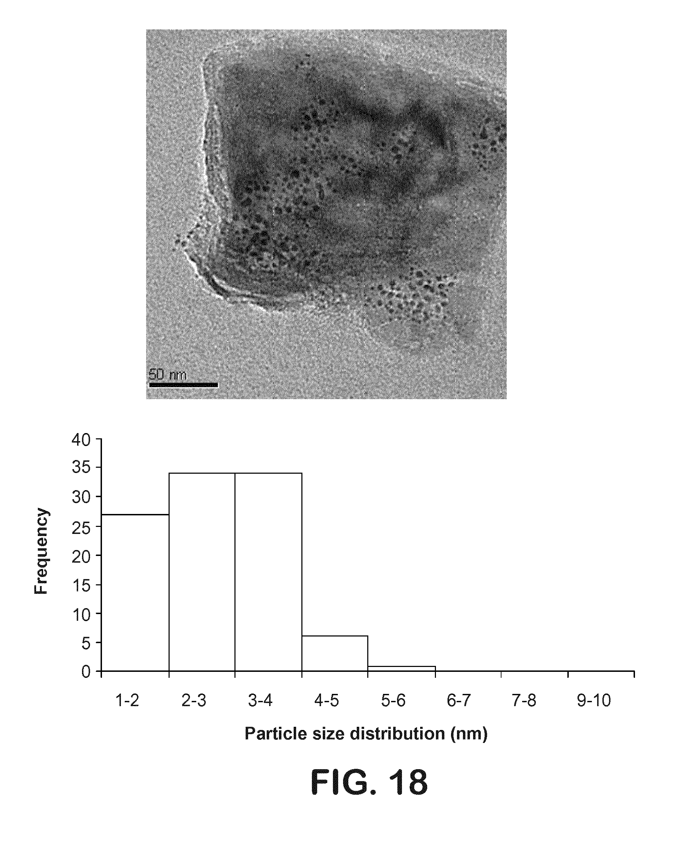

FIGS. 17 and 18 show bright field images and corresponding histograms of particle size distributions of the post-reaction solids isolated from heavy product using extraction with CH₂Cl₂, and obtained by catalytic emulsion decomposition from formulations E-T and AT-48.

In both images nano-particles are seen with a size distribution between 2 and 10 nm for the E-T formulation, and a size distribution between 1 and 6 nm for the AT-48 formulation, with a narrower particle distribution size. Also, the micrograph for the E-T formulation shows some aggregated particles, with size between 10 and 30 nm.

Taking into account that both particles are generated under the same operating conditions, and both formulations proceed from the same soluble precursor in aqueous phase, it seems that grade of presulfurization affects reactive center properties, generated during reaction.

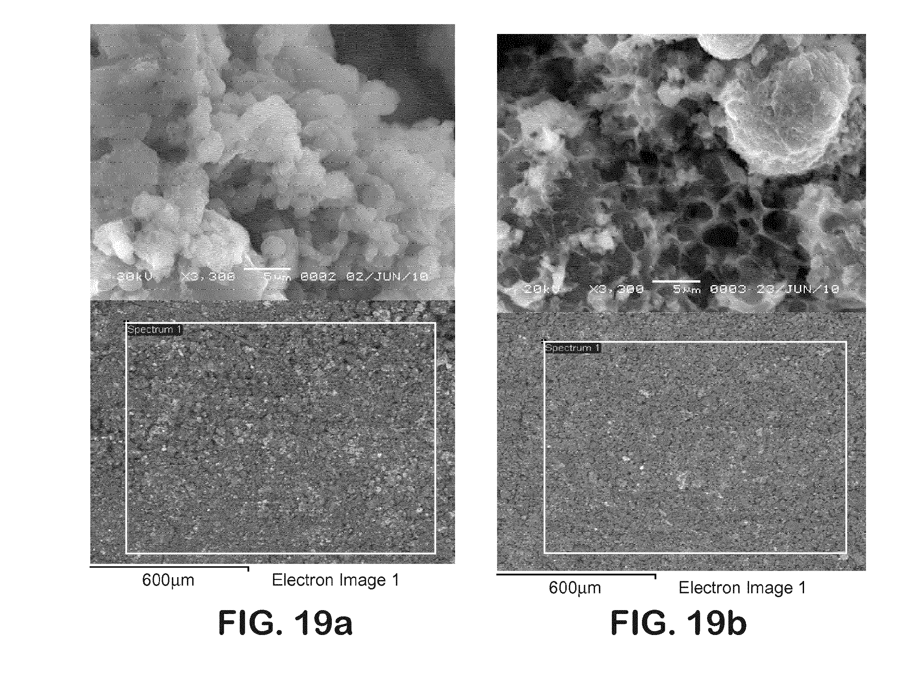

In FIGS. 19a and 19b, micrographs for reaction solids isolated from heavy product for E-T and AT-48 formulations, are shown together with the zone from which the compositional analysis was done, using EDS. In E-T images, agglomerated particles with a homogeneous grain size are observed, while image for AT-48 show a porous solid.

For chemical composition determination for the same solid particles, EDS showed that these solids are formed by C, O, S, V, Ni and Mo (Table 8). Considering that V is not part of the catalytic formulation used, it is clear that this element is recovered by demetallization of feedstock. Also, traces of Fe and Cl were observed.

Characterization results for E-T and AT-48 formulation, at the same operation conditions, show metallic compounds formation, probably metal sulfides, with nanometrics sizes, with properties that are affected by the catalytic precursor sulfurization grade, which influences catalytic performance.

**Table 8. Chemical composition by SEM-EDS**

| Elements | E-T Atomic (%) | AT-48 Atomic (%) |
|---|---|---|
| C | 95.12 | 94.19 |
| O | 1.94 | 3.08 |
| S | 1.91 | 1.78 |
| V | 0.48 | 0.53 |
| Ni | 0.20 | 0.26 |
| Mo | 0.16 | 0.16 |

Taking into account, all the results in this example, AT-48 formulation according to the invention can be used to upgrade heavy oils, and can have a similar performance to E-T, having a lower quantity of molybdenum. This test shows that both AT-48 and E-T have an excellent hydrogenation, with similar conversions and liquid yields, which can be affected by the additives and the composition of the gas in the reaction zone.

### Example 2

### Feedstock

As feedstock was used a vacuum residue 500°C⁺ Merey/Mesa, which is a mixture of 53 v/v% Merey crude and 47 v/v% Mesa crude. The vacuum residue Merey/Mesa was characterized in accordance with standard procedures and properties are listed in Table 3 above.

### Catalysts

Catalyst precursors evaluated were synthesized according to the method of FIG. 1, obtaining ultra-dispersed emulsion W/O of molybdenum and nickel, which active species were generated *in situ* through thermal decomposition of the emulsified system in a reducer environment of H₂/H₂S.

Preparation followed in different stages. The first stage consisted in preparing a precursor of Mo(VI), by direct dissolution of AHM with a sulfiding agent, at a determinate composition and temperature with constant stirring.

In the second stage, a quantity of the continuous phase was mixed (HVGO) (main properties in Table 4) with the surfactant; this mixture was homogenized with mechanical stirring. The emulsion was prepared by incorporation of aqueous Mo precursor in the organic matrix, formed by heavy vacuum gasoil (containing surfactant), using mechanical stirring.

Two catalytic emulsions were formulated. The first one was prepared starting with a Mo precursor, partially presulfurated in solution. This formulation is completely sulfurated after being emulsified. Second catalytic emulsion was prepared starting with a Mo precursor, completely sulfurated, where MoS₄²⁻ was maximized without solids precipitation, and then was emulsified. The first emulsion was called E-T, while the sulfurated in solution emulsion was called AT-48.

Nickel emulsion was prepared similarly to the E-T molybdenum emulsion. First, a nickel aqueous precursor was prepared using Nickel (II) acetate tetrahydrated, with a specific concentration. Then this solution was incorporated in the organic matrix, which had been previously contacted with the surfactant.

### Additives

An organic additive was used, which is as disclosed in co-pending and commonly owned U.S. Patent Application No. 2011/0174690 A1, filed in January 21, 2010, in order to minimize foam, control temperature, adsorb contaminants (asphaltenes and metals) and possibly serve as a support for the active catalytic species for some of the chemical reactions that take place in the reaction zone. The average particles size of the additive was (X₅₀) 40.0 µm.

### Experimental setup

The catalysts performance, at 445°C, was tested using a pilot plant with one reactor with a total volume of 1200 ml. This reactor has five heating zones, in which five isothermal furnaces are placed. Also, this plant has an additive injection system, a feedstock and gas preheating system, emulsion tanks, recycle and feed, a high pressure high temperature separator, a three-phase separator, heavy and light product tanks, and a sampling system. This experimental setup correspond to scale-down system of the process disclosed in co-pending and commonly owned U.S. Patent Application No. 2011/0120908 A1, filed in January 21, 2010.
Two different conditions were tested, as shown in Table 9.

**Table 9. Operation conditions**

| **# Catalyst** | **[Mo] (ppm wt)** | **T (°C)** | **P (psig)** | **LHSV (h⁻¹)** | **Particle size (µm)** |
|---|---|---|---|---|---|
| 1 E-T | 500 | 445 | 2159 | 0.4 | 40.0 |
| 2 AT-48 | 250 | 445 | 2159 | 0.4 | 40.0 |

It should be noted that, for all conditions, recycle gas was used. Nickel concentration was the same for all conditions.

### Results

The pilot plant had a total of 15 mass balances for conditions 1 and 2, closed in the acceptable range, with an average ratio percentage of massₒᵤₜ/massᵢₙ, around 99 ± 2 %.

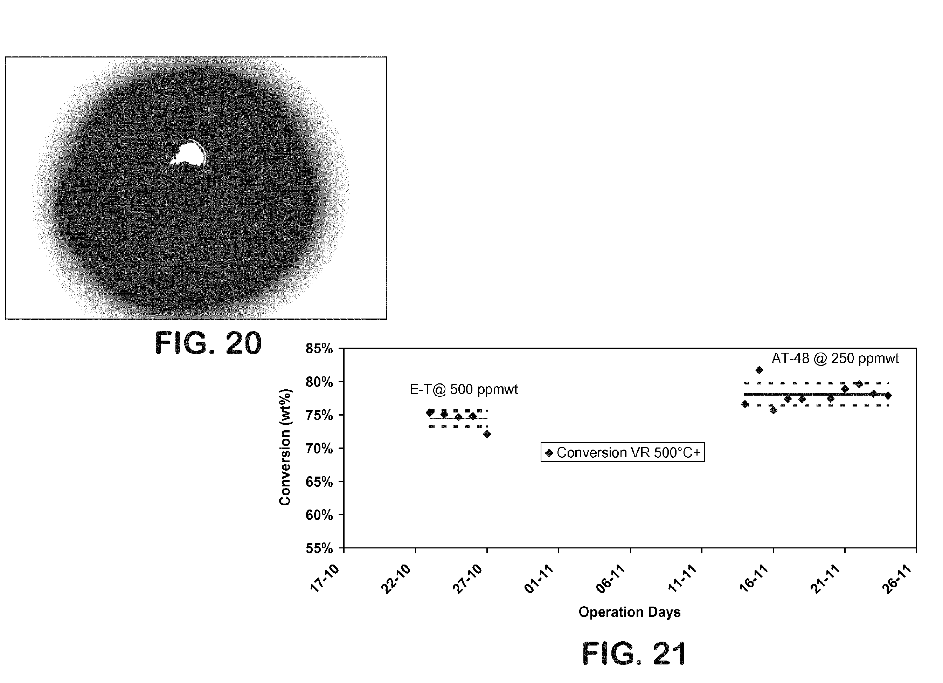

Regarding reactor inspection, at the end of the test, almost no fouling was found inside the reactor, as shown in FIG. 20. This behavior is typical of good hydrogenation catalysts, which means that VR 500°C⁺ and asphaltenes are converted with a low coke production, which is a very desirable property for a hydrocracking/hydrotreating catalyst.

### Conversions

VR 500°C⁺ conversions, presented in FIG. 21, show an effect over conversion levels when the formulations were changed, and the highest conversion was for AT-48 with 76.3 ± 1.7 wt %, while E-T conversion was 72.7 ± 1.2 wt %.

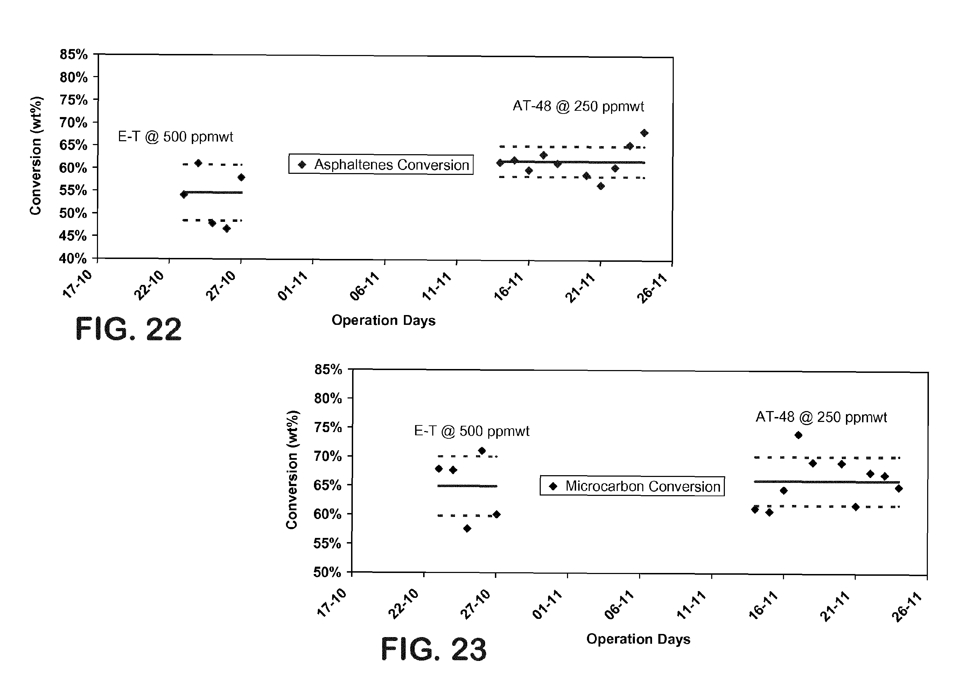

Asphaltenes conversion, presented in FIG. 22, shows that for the E-T condition conversion was 56.1 ± 6.0 wt %, and for AT-48 condition a variation was perceived, having a value of 61.7 ± 3.3 wt %.

Microcarbon conversions, are shown in FIG. 23 as VR 500°C⁺ conversions, and for formulations E-T and AT-48, an equal value was produced among them of 65.5 ± 4.7 wt %.

### Liquid product yields

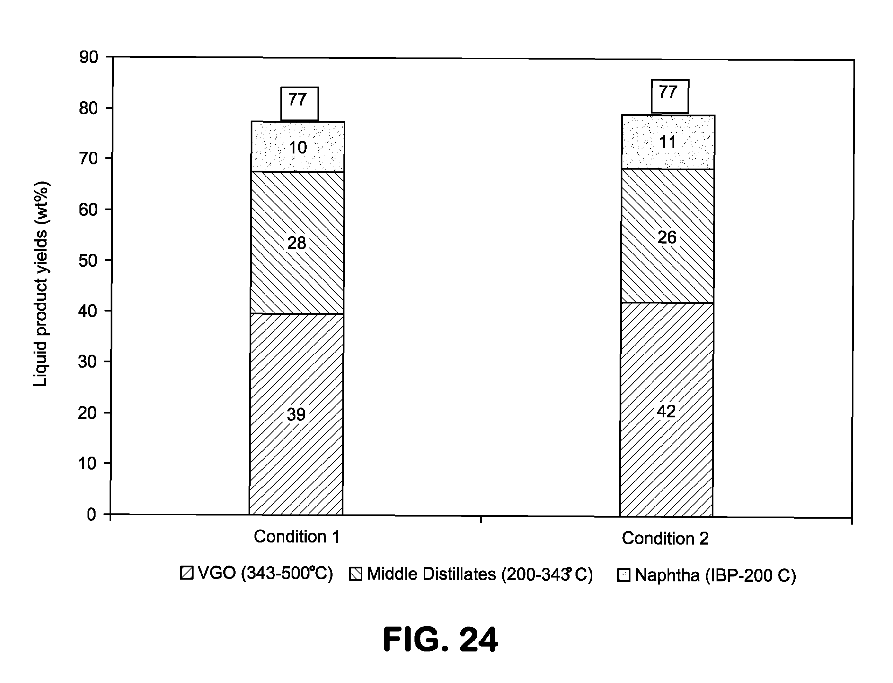

As seen in FIG. 24, there was almost no difference between liquid product distribution for formulations E-T and AT-48, meaning that using 50 wt% less metal concentration in formulation, a similar product with a good quality can be obtained, and an increase of around 2 wt% of the liquid product yield with AT-48 was found.

Taking into account all results of this example, AT-48 formulation demonstrated that it can be used to upgrade heavy oils, and can have a similar or better performance compared to E-T, despite having a lower quantity of molybdenum. This test showed that both, AT-48 and E-T, have an excellent hydrogenation, with similar conversions and liquid yields, which demonstrated that presulfurization conditions can affect the catalyst performance.

### Example 3

### Feedstock

As feedstock was used a vacuum residue 500°C⁺ Merey/Mesa, which is a mixture of 53 v/v% Merey crude and 47 v/v% Mesa crude. The vacuum residue Merey/Mesa was characterized in accordance with standard procedures and properties are listed in Table 10.

**Table 10. Properties of feedstock VR Merey/Mesa**

| Distillate (wt%) | Temperature (°C) |
|---|---|
| IBP | 345.6 |
| 1 | 433.9 |
| 5 | 495.4 |
| 10 | 516.4 |
| 15 | 537.0 |
| 20 | 558.1 |
| 25 | 577.8 |
| 30 | 596.9 |
| 35 | 615.0 |
| 40 | 632.1 |
| 45 | 647.9 |
| 50 | 664.3 |
| 55 | 687.7 |
| 59 | 713.4 |

### Catalysts

Catalyst precursors were synthesized according to the methods of FIGS 1 and 2, obtaining ultra-dispersed emulsion W/O of molybdenum and nickel. Molybdenum active specie was generated *in situ* through thermal decomposition of the emulsified system in a reducer environment of H₂/H₂S. Nickel active specie was generated by method of FIG. 2, wherein nickel sulfide species are already dispersed in the oil phase before it is combined with the feedstock.

Preparation was carried out in different stages. The first stage consisted in preparing a precursor of Mo(VI), by direct dissolution of AHM with a sulfiding agent, at a determinate composition and temperature with constant stirring.

In the other hand in the second stage, a quantity of the continuous phase was mixed (HVGO) (main properties in Table 4) with the surfactant; this mixture was homogenized with mechanical stirring. The emulsion was prepared by incorporation of aqueous Mo precursor in the organic matrix, formed by heavy vacuum gasoil (containing surfactant), using mechanical stirring. This emulsion was called AT-48.

The nickel emulsion was prepared starting with a nickel aqueous precursor, using Nickel (II) acetate tetrahydrated, with a specific concentration, and then this solution was incorporated in the organic matrix, which had been previously contacted with the surfactant. This emulsion is sulfurated to form a nickel sulfide phase dispersed in the oil phase, before being injected to the hydroconversion zone.

### Experimental setup

The catalyst performance at around 425°C was tested using one Parr reactor with a total volume of 300 ml. This reactor was heated using a furnace. Feedstock was charged in the reactor preheated in combination with the emulsions. Hydrogen was injected to the reactor during the whole test. After reaction was completed, products were removed from the reactor and analyzed.

Nickel formulation was tested in conjunction with AT-48 and operation conditions are shown in Table 11.

**Table 11. Operation conditions**

| # Catalyst | [Ni] (ppm wt) | T (°C) | P (psig) |
|---|---|---|---|
| 1 AT-48/NiS | 80 | 425 | 1000 |

Fresh hydrogen was used for this test.

### Results

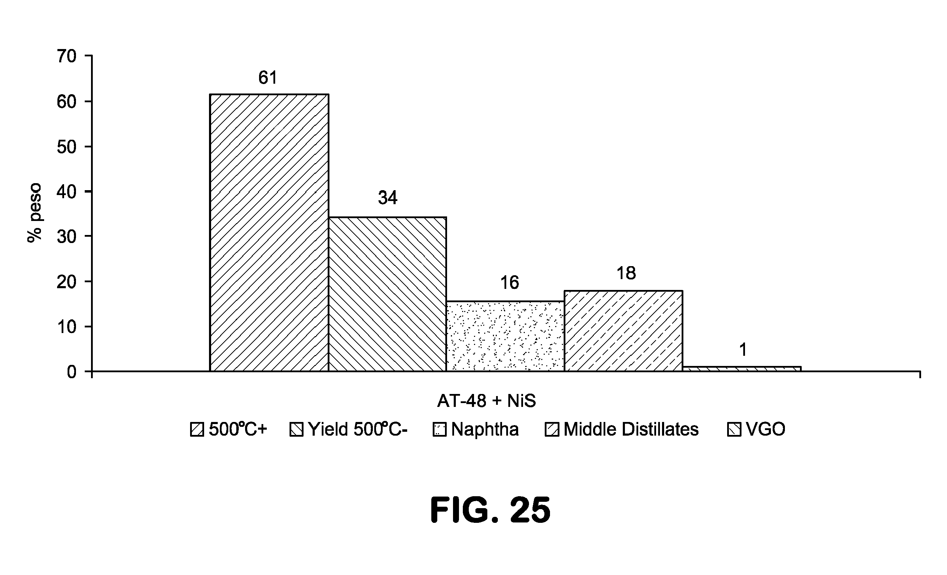

As seen in FIG. 25, AT-48/NiS had a conversion of 61 wt%, a liquid yield of 34 wt% with a naphtha yield of 16 wt%, a middle distillates yield of 18 wt% and VGO yield of 1 wt%.

Results of this example demonstrate that AT-48/NiS formulation can be used to upgrade heavy oils.

### Example 4

Samples were obtained from the non-converted residue (NCR) containing the organic additive and spent catalyst, resulting from Example 1. Deep characterization of the NCR and the asphaltenes was performed.

NCR for E-T and AT-48 were desolificated and deasphalted, to obtain VR 500°C+ and the asphaltenes in this product, in order to carry out analyses such as: high resolution liquid chromatography, carbon and hydrogen elemental analysis, nitrogen, sulfur, nickel, and vanadium contents, simulated distillation, ¹³C and ¹H nuclear magnetic resonance and asphaltene content. The results are shown in Tables 12-15.

### Results

**Table 12. Elemental analysis of NCR and feedstock**

| **Sample** | **VR Merey/Mesa** | **NCR E-T/Ni** | **NCR AT-48/Ni** |
|---|---|---|---|
| C (± 1.69 wt%) | 83.94 | 84.03 | 83.14 |
| H (± 0.53 wt%) | 10.53 | 9.12 | 8.71 |
| S (± 0.04 wt%) | 3.15 | 2.48 | 2.31 |
| N (± 0.018 ppm wt) | 0.212 | - | - |
| H/C^{a} | 1.505 | 1.302 | 1.257 |
| S/C^{a} | 0.1 | 0.077 | 0.074 |
| Ni (± 3 ppmv) | 114 | 106 | 110 |
| V (± 18 ppmv) | 480 | 160 | 184 |
| Ni/V^{a} | 0.206 | 0.663 | 0.598 |

| | | | |
|---|---|---|---|
| a: ratio calculated considering mass of each atom | | | |

**Table 13. NMR ¹³C of NCR and feedstock**

| Sample | VR Merey/Mesa NCR | E-T/Ni | NCR AT-48/Ni |
|---|---|---|---|
| % Cₐₗᵢ (±2) | 61.96 | 41.10 | 43.95 |
| % CH₃ (± 2,8) | 10.71 | 6.82 | 8.41 |
| % CH₂ (± 3,4) | 37.29 | 26.81 | 24.40 |
| % CHₐₗᵢ (± 2,8) | 13.51 | 7.46 | 10.95 |
| % C_{q,ali} (± 2)a | 0.45 | 0.00 | 0.18 |
| C/H (ali) | 0.52 | 0.50 | 0.52 |
| % Cₐᵣₒ(± 2) | 38.04 | 58.90 | 56.05 |
| % CHₐᵣₒ (±2,8) | 13.88 | 19.25 | 36.17 |
| % C_{q,aro} (± 2) | 24.17 | 39.66 | 19.88 |
| % C_{q,sub} (±2) | 15.44 | 22.79 | 13.74 |
| % C_{q,con} (±2) | 8.73 | 16.87 | 6.14 |
| C/H (aro) | 2.74 | 3.06 | 1.55 |
| Pericondensation index | 2.22 | 2.76 | 3.68 |
| Catacondensation index | 2.70 | 1.46 | 1.56 |

| | | | |
|---|---|---|---|
| a: Cq = Quaternary carbons | | | |

**Table 14. Elemental analysis of asphaltenes from NCR and feedstock**

| **Sample** | **VR Merey/Mesa** | **NCR E-T/Ni** | **NCR AT-48/Ni** |
|---|---|---|---|
| C (± 1.69 wt%) | 81.39 | 85.11 | 84.46 |
| H (± 0.53 wt%) | 7.93 | 4.98 | 6.15 |
| S (± 0.04 wt%) | 1.17 | 0.70 | 0.87 |
| N (± 0.018 ppm wt) | 5.00 | 3.00 | 3.00 |
| H/C^{a} | 450 | 420 | 420 |
| S/C^{a} | 1800 | 560 | 630 |
| Ni (± 3 ppmv) | 0.217 | 0.650 | 0.578 |
| V (± 18 ppmv) | 81.39 | 85.11 | 84.46 |
| Ni/V^{a} | 7.93 | 4.98 | 6.15 |

| | | | |
|---|---|---|---|
| a: ratio calculated considering mass of each atom | | | |

**Table 15. NMR ¹³C of asphaltenes from NCR and feedstock**

| **Sample** | **AVR Merey/Mesa** | **ANCR E-T/Ni** | **ANCR AT-48/Ni** |
|---|---|---|---|
| % Cₐₗᵢ (±2) | 51 | 28 | 22 |
| % CH₃ (± 2,8) | 11.2 | 6.2 | 6.1 |
| % CH₂ (± 3,4) | 28.4 | 16.9 | 12.1 |
| % CHₐₗᵢ (± 2,8) | 11.9 | 4.4 | 3.9 |
| % C_{q,ali} (± 2)^{a} | 0 | 1.00 | 0 |
| C/H (ali) | 0.50 | 0.50 | 0.48 |
| % Cₐᵣₒ (± 2) | 49 | 72.00 | 78 |
| % CHₐᵣₒ (±2,8) | 14.6 | 23.7 | 27.1 |
| % C_{q,aro} (± 2) | 34 | 48.00 | 51 |
| % C_{q,sub} (±2) | 18 | 19.00 | 20 |
| % C_{q,con} (±2) | 16 | 29.00 | 31 |
| C/H (aro) | 3.35 | 3.02 | 2.87 |
| Pericondensation index | 3.27 | 4.52 | 4.36 |
| Catacondensation index | 4.85 | 9.10 | 8.39 |

| | | | |
|---|---|---|---|
| a: Cq = Quaternary carbons | | | |

Variations observed in ratios H/C and S/C between VR Merey/Mesa and NCR for E-T and AT-48 showed that both formulations increase the aromaticity in the NCR, in the same proportion.

Changes in types of carbons percentages, in the NCR and their asphaltenes, in NMR ¹³C, indicated that the increase in aromaticity for AT-48 is based in the generation of less condensed molecules, in comparison with the molecules generated by the E-T formulation.

When comparing ratio Ni/V for the VR Merey/Mesa and NCR for E-T and AT-48, it could be seen that demetallization occurs for both formulations in the same proportion.

Changes in chromatography distribution suggested that employing AT-48, conversion to carbons with a higher number of carbons and polarity is done with higher efficiency.

It is to be understood that the invention is not limited to the illustrations described and shown herein, which are deemed to be merely illustrative of the best modes of carrying out the invention, and which are susceptible of modification of form, size, arrangement of parts, and details of operation. The invention rather is intended to encompass all such modifications which are within its spirit and scope as defined by the claims.

## Claims

1. A catalyst composition comprising:
an emulsion of an aqueous phase in an oil phase, wherein the aqueous phase contains a group 6 metal, and wherein between about 55 and 100 wt% of the group 6 metal is sulfurated.

2. The catalyst of claim 1, wherein the group 6 metal in the aqueous phase is completely sulfurated.

3. The catalyst of claim 1 or 2, wherein the group 6 metal comprises molybdenum, and the aqueous solution is a thiomolybdate solution.

4. The catalyst of one of claims 1 to 3, wherein the aqueous phase further comprises a group 8, 9 or 10 metal.

5. The catalyst of claim 4, further comprising a separate emulsion of an aqueous phase in an oil phase, wherein the aqueous phase of the separate emulsion contains the group 8, 9 or 10 metal.

6. The catalyst of claim 4 or 5, wherein the group 8, 9 or 10 metal is sulfurated.

7. The catalyst of one of claims 1 to 6, wherein the oil phase comprises HVGO, HHGO, mineral oil, petroleum cuts, naphthenic acids extracted from petroleum cuts or mixtures thereof.

8. The catalyst of one of claims 1 to 7, wherein the group 6 metal is present at a concentration of between 50 and 1000 ppm wt.

9. The catalyst of one of claims 1 to 8, wherein the catalyst, when subjected to hydroconversion, generates post-reaction solids having a particle size distribution between 0.1 and 15 nm.

10. The catalyst of one of claims 1 to 9, wherein the emulsion has an average droplet size of less than 10 µm.

11. A method for making a catalyst emulsion, comprising the steps of:
providing an aqueous phase comprising an aqueous solution of a group 6 metal, wherein between about 55 and 100 wt% of the group 6 metal is sulfurated; and
mixing the aqueous phase into an oil phase to form an emulsion of the aqueous phase in the oil phase.

12. The method of claim 11, wherein the group 6 metal in the aqueous phase is completely sulfurated.

13. The method of claims 11 or 12, wherein the group 6 metal comprises molybdenum, and wherein the aqueous phase comprises a thiomolybdate solution.

14. The method of one of claims 11 to 13, further comprising preparing an additional emulsion of an aqueous phase containing a group 8, 9, or 10 metal in an oil phase.

15. The method of claim 14, wherein the group 8, 9 or 10 metal is sulfurated before contact with a feedstock or *in situ* in a reaction zone.

16. The method of claim 15, further comprising feeding the emulsion, the additional emulsion, and a feedstock to a hydroconversion zone.

17. The method of one of claims 11 to 16, wherein the oil phase comprises HVGO, HHGO, mineral oil, petroleum cuts, naphthenic acids extracted from petroleum cuts or mixtures thereof.

18. The method of one of claims 11 to 17, wherein the group 6 metal is present at a concentration of between 50 and 1,000 ppm wt.

19. The method of one of claims 11 to 18, wherein the providing step comprises mixing a group 6 metal source and a sulfurating agent in water to form the aqueous phase.

20. The method of claim 19, wherein the group 6 metal and the sulfurating agent are mixed at a ratio by weight of sulfur to group 6 metal measured as S²⁻/M of at least 3.0, which M is the group 6 metal.

21. A hydroconversion process, comprising the steps of: contacting the catalyst of one of claims 1 to 10 with a feedstock in a hydroconversion zone under hydroconversion conditions.

22. The process of claim 21, further comprising adding a carbon additive to the hydroconversion zone to control foam in the hydroconversion zone and scavange catalyst and feedstock metals.
